# EUROPÄISCHE PATENTSCHRIFT

(11) **EP 2 422 105 B1**
(45) Veröffentlichungstag und Bekanntmachung des Hinweises auf die Patenterteilung: **18.12.2013**
(21) Anmeldenummer: 10711594.1
(22) Anmeldetag: 30.03.2010
(51) Int. Cl.: F16D 43/18, B66D 5/16, A62B 1/10

(54) **FLIEHKRAFTKUPPLUNG UND GETRIEBELOSES ABSEILGERÄT**
CENTRIFUGAL CLUTCH AND GEARLESS ABSEIL DEVICE
EMBRAYAGE CENTRIFUGE ET DESCENDEUR À ENTRAÎNEMENT DIRECT

(30) Priorität: 21.04.2009 DE 202009005925 U
(43) Veröffentlichungstag der Anmeldung: 29.02.2012
(73) Patentinhaber: Skylotec GmbH, 56567 Neuwied (DE)
(72) Erfinder: RINKLAKE, Kai, 56567 Neuwied (DE)
(74) Vertreter: Zeitler - Volpert - Kandlbinder
(86) Internationale Anmeldenummer: PCT/EP2010/002027
(87) Internationale Veröffentlichungsnummer: WO 2010/121699

(56) Entgegenhaltungen:
- DE-A1- 2 326 041
- DE-B- 1 103 691
- DE-C1- 3 338 776

## Beschreibung

Die vorliegende Erfindung betrifft eine Fliehkraftkupplung mit einem Rotor und einem Kupplungsbauteil gemäß dem Oberbegriff des Anspruchs 1. Eine solche Fliehkraftkupplung ist aus der DE 1103691 bekannt. Die vorliegende Erfindung betrifft ferner eine Abseilvorrichtung für ein Sicherungsseil gemäß dem Oberbegriff des Anspruchs 9. Eine solche Abseilvorrichtung ist aus der DE 2326041 bekannt. Die vorliegende Erfindung betrifft ferner ein Auffanggerät, insbesondere Steigschutzläufer gemäß dem Oberbegriff des Anspruchs 18.

Der Erfindung liegt die Aufgabe zugrunde, eine Fliehkraftkupplung bzw. eine Abseilvorrichtung sowie ein Auffanggerät mit einer derartigen Fliehkraftkupplung der o.g. Art hinsichtlich Funktionssicherheit und Haltekraft zu verbessern und gleichzeitig einen Bauraumbedarf zu optimieren.

Diese Aufgabe wird erfindungsgemäß durch eine Fliehkraftkupplung der o.g. Art mit den in Anspruch 1 gekennzeichneten Merkmalen, durch eine Abseilvorrichtung der o.g. Art mit den in Anspruch 9 gekennzeichneten Merkmalen und durch ein Auffanggerät der o.g. Art mit den in Anspruch 18 gekennzeichneten Merkmalen gelöst. Vorteilhafte Ausgestaltungen der Erfindung sind in den weiteren Ansprüchen beschrieben.

Bei einer Fliehkraftkupplung der o.g. Art ist es erfindungsgemäß vorgesehen, dass das Fliehgewicht an dem Rotor zusätzlich in Umfangsrichtung wenigstens entgegen der Drehrichtung des Rotors bewegbar angeordnet ist, wobei eine Anlagefläche zwischen dem Rotor und dem Fliehgewicht derart ausgebildet ist, dass sich ausgehend von der ersten Stellung in Umfangsrichtung entgegen der Drehrichtung des Rotors gesehen ein Abstand zwischen der Anlagefläche und der Kupplungswandung des Kupplungsbauteils verringert.

Dies hat den Vorteil, dass der mechanische Kraftschluss zwischen dem Rotor und dem Kupplungsbauteil über den Reibschluss durch die auf das Fliehgewicht wirkende Zentripetalkraft hinaus verstärkt wird. Hierdurch ist es möglich, mit einer geometrisch kleinen Fliehkraftkupplung mit geringem Bauraumbedarf bereits bei niedrigen Werten für die vorbestimmte Drehzahl des Rotors besonders hohe Kräfte zwischen dem Rotor und dem Kupplungsbauteil zu übertragen bzw. eine wirksame kraftschlüssige Verbindung zu erzielen.

Eine Kraftverstärkung des Kraftschlusses zwischen Rotor und Kupplungsbauteil erst dann, wenn das Fliehgewicht tatsächlich an der Wandung des Kupplungsbauteils anschlägt, erzielt man dadurch, dass das Fliehgewicht derart an dem Rotor angeordnet ist, dass die Bewegung in Umfangsrichtung erst freigegeben ist, wenn das Fliehgewicht die zweite Stellung erreicht.

Eine Aufrechterhaltung des klemmenden Kraftschlusses auch bei Stillstand des Rotors nach dem Überschreiten der vorbestimmten Drehzahl allein durch ein belastendes Drehmoment auf den Rotor erzielt man dadurch, dass die Anlagefläche derart ausgebildet ist, dass sich der Abstand zur Kupplungswandung bis zu einem Wert verringert, welcher kleiner ist als eine Breite des Fliehgewichtes in radialer Richtung bzgl. des Rotors.

Gemäß der Erfindung ist der Rotor im Bereich der Anlagefläche zwischen Rotor und Fliehgewicht im Querschnitt oval ausgebildet, wobei das Fliehgewicht derart angeordnet ist, dass es in der ersten Stellung in einem Bereich der ovalen Anlagefläche anschlägt, in dem die ovale Anlagefläche in radialer Richtung den kleinsten Querschnitt aufweist. Auf diese Weise führt eine Relativbewegung zwischen dem Fliehgewicht und dem Rotor dazu, dass das Fliehgewicht auf der ovalen Anlagefläche in Umfangsrichtung von einem minimalen Querschnitt der ovalen Anlagefläche hin zu einem maximalen Querschnitt bewegt wird. Hierbei ist diese Funktion unabhängig von der Drehrichtung des Rotors.

Eine mechanisch besonders einfache und gleichzeitig funktionssichere Ausführungsform erzielt man dadurch, dass zwei Fliehgewichte vorgesehen sind, die beabstandet von dem Rotor und beidseits des Rotors mittels wenigstens zweier federelastischer Elemente miteinander derart verbunden sind, dass die federelastischen Elemente die Fliehgewichte radial zueinander mit Kraft beaufschlagen und gegen die Anlagefläche auf dem Rotor drücken.

In einer besonders bevorzugten Ausführungsform bilden die Fliehgewichte zwischen sich im Querschnitt eine ovale Öffnung aus, die die ovale Anlagefläche des Rotors umgreift.

In einer beispielhaften Ausführungsform ist das Fliehgewicht als Ringsegment, insbesondere als Halbringsegment, oder D-förmig oder U-förmig ausgebildet. Optional sind hierbei an freien Enden des Fliehgewichtes Ausnehmungen zur Aufnahme eines Federelementes ausgebildet.

In einer bevorzugten Ausführungsform umgibt die Kupplungswandung des Kupplungsbauteils den Rotor radial.

Bei einer Abseilvorrichtung der o.g. Art ist es erfindungsgemäß vorgesehen, dass die zweite Bremsvorrichtung als Fliehkraftkupplung ausgebildet ist.

Dies hat den Vorteil, dass eine getriebefreie Abseilvorrichtung zur Verfügung steht, welche bei kleinem Bauraumbedarf schon bei geringen Drehzahlen des Rotors eine hohe Bremswirkung erzielt.

Zweckmäßigerweise umfasst das Kupplungsbauteil ein Gehäuse, wobei die Kupplungswandung in dem Gehäuse ausgebildet ist.

Eine besonders kompakte Bauweise erzielt man dadurch, dass die erste Bremsvorrichtung und die zweite Bremsvorrichtung gemeinsam auf dem Rotor angeordnet sind. Der Rotor ist bevorzugt drehbar bezüglich der Achse und auf der Achse angeordnet. Zur Übertragung der Drehbewegung auf den Rotor sind dabei der Rotor und die zweite Bremsvorrichtung derart ausgebildet und angeordnet, dass eine reibschlüssige Verbindung zwischen dem Sicherungsseil und dem Rotor hergestellt ist. In einer besonders bevorzugten Ausführungsform weist der Rotor einen drehfest mit diesem verbundenen Deckel auf, welcher axial zwischen der ersten und zweiten Bremsvorrichtung derart angeordnet ist, dass das wenigstens eine Fliehgewicht der zweiten Bremsvorrichtung eine reibschlüssige Verbindung zu dem Deckel herstellt.

Eine direkte Drehung des bzw. der Fliehgewichte der zweiten Bremsvorrichtung durch eine Seilrolle erzielt man dadurch, dass eine Seilrolle für das Sicherungsseil vorgesehen ist, welche wenigstens einen Mitnehmer aufweist, der an wenigstens einem Fliehgewicht der zweiten Bremsvorrichtung anschlägt, so dass ein Formschluss zwischen dem Fliehgewicht und der Seilrolle hergestellt ist. Zweckmäßigerweise sind zwei Mitnehmer ausgebildet, die axial in Zwischenräume zwischen zwei Fliehgewichten der zweiten Bremsvorrichtung greifen.

Eine besonders einfache Konstruktion erzielt man dadurch, dass der wenigstens eine Mitnehmer einstückig mit der Seilrolle ausgebildet ist.

Bei einem Auffanggerät der o.g. Art ist es erfindungsgemäß vorgesehen, dass die Fliehkraftkupplung wie zuvor beschrieben ausgebildet ist.

Dies hat den Vorteil, dass ein Auffanggerät mit kleinen Abmessungen bei gleichzeitig hoher Wirkung des Auffangmechanismus zur Verfügung steht.

Die Erfindung wird im Folgenden anhand der Zeichnung näher erläutert. Diese zeigt in:
- Fig. 1: eine erste bevorzugte Ausführungsform einer erfindungsgemäßen Fliehkraftkupplung in Seitenansicht in einer ersten Stellung,
- Fig. 2: die erste bevorzugte Ausführungsform einer erfindungsgemäßen Fliehkraftkupplung gemäß Fig. 1 in einer zweiten Stellung,
- Fig. 3: eine zweite bevorzugte Ausführungsform einer erfindungsgemäßen Fliehkraftkupplung in perspektivischer Ansicht,
- Fig. 4: die zweite bevorzugte Ausführungsform einer erfindungsgemäßen Fliehkraftkupplung gemäß Fig. 3 in Seitenansicht,
- Fig. 5: eine perspektivische Detailansicht des Bereiches C in Fig. 3 der zweiten bevorzugten Ausführungsform einer erfindungsgemäßen Fliehkraftkupplung gemäß Fig. 3,
- Fig. 6: eine perspektivische Detailansicht des Bereiches A in Fig. 4 der zweiten bevorzugten Ausführungsform einer erfindungsgemäßen Fliehkraftkupplung gemäß Fig. 4,
- Fig. 7: eine perspektivische, teilweise geschnittene Detailansicht des Bereiches B in Fig. 4 der zweiten bevorzugten Ausführungsform einer erfindungsgemäßen Fliehkraftkupplung gemäß Fig. 4,
- Fig. 8: ein Kupplungsbauteil der Fliehkraftkupplung gemäß Fig. 3 in perspektivischer Ansicht,
- Fig. 9: ein Fliehgewicht der Fliehkraftkupplung gemäß Fig. 3 in perspektivischer Ansicht,
- Fig. 10: einen Rotor der Fliehkraftkupplung gemäß Fig. 3 in perspektivischer Ansicht,
- Fig. 11: den Rotor gemäß Fig. 10 in einer Seitenansicht in Richtung einer Längsachse des Rotors,
- Fig. 12: den Rotor gemäß Fig. 10 in einer Seitenansicht in Richtung senkrecht zu einer Längsachse des Rotors,
- Fig. 13: eine bevorzugte Ausführungsform eines erfindungsgemäßen Abseilgerätes in perspektivischer Explosionsdarstellung,
- Fig. 14: eine Fliehkraftkupplung des Abseilgerätes gemäß Fig. 13 in Aufsicht,
- Fig. 15: die Fliehkraftkupplung gemäß Fig. 14 in Seitenansicht und
- Fig. 16: die Fliehkraftkupplung gemäß Fig. 14 in perspektivischer Ansicht.

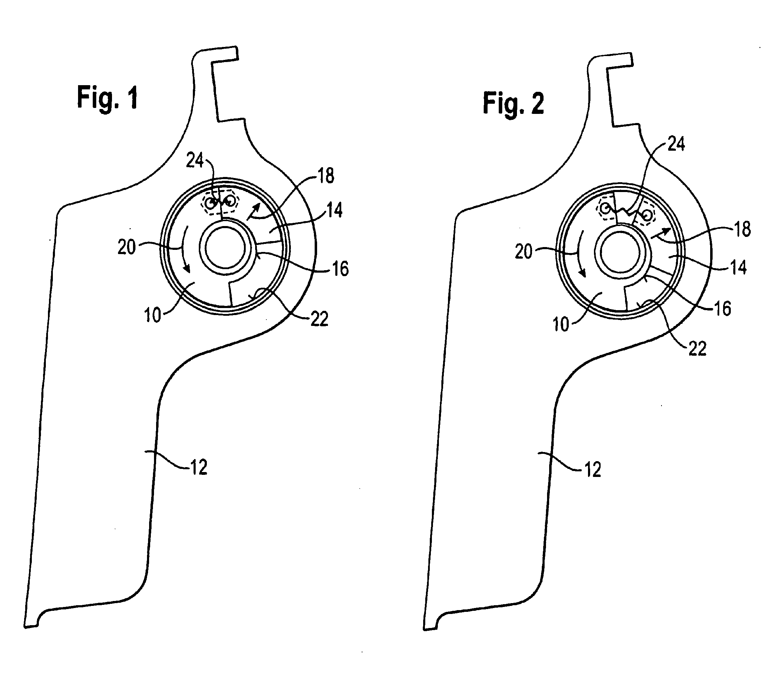

Die in Fig. 1 und 2 dargestellte, erste bevorzugte Ausführungsform einer erfindungsgemäßen Fliehkraftkupplung umfasst einen Rotor 10, ein Kupplungsbauteil 12 und ein Fliehgewicht 14, welches auf einer Anlagefläche 16 des Rotors 10 aufliegt. Das Fliehgewicht 14 ist an dem Rotor 10 derart angeordnet, dass das Fliehgewicht 14 relativ zum Rotor 10 in radialer Richtung 18 nach außen bewegbar und in Umfangsrichtung in Richtung entgegengesetzt zur Drehrichtung 20 des Rotors 10 bewegbar ist. Das Kupplungsbauteil 12 umgibt den Rotor 10 radial außen und in Umfangsrichtung mit einer Kupplungswandung 22. In Fig. 1 befindet sich das Fliehgewicht 14 in einer ersten Stellung, bei der es von der Kupplungswandung 22 des Kupplungsbauteils 12 beabstandet ist, so dass sich der Rotor 10 frei innerhalb des Kupplungsbauteiles 12 drehen kann.

Das Fliehgewicht 14 ist mit dem Rotor 10 über ein federelastisches Bauteil 24 mechanisch derart verbunden, dass das federelastische Bauteil 24 das Fliehgewicht 14 relativ zum Rotor 10 mit einer Vorspannungskraft beaufschlagt, die das Fliehgewicht 14 in Richtung der ersten Stellung gemäß Fig. 1 zieht.

Mit zunehmender Drehzahl des Rotors 10 wirkt auf das Fliehgewicht 14 eine zunehmende Zentripetalkraft in radialer Richtung 18. Diese führt zu einer Relativbewegung des Fliehgewichtes 14 in radialer Richtung 18 entgegen einer entsprechenden Rückstellkraft des federelastischen Bauteils 24 in Richtung der ersten Stellung. In der Folge schlägt das Fliehgewicht 14 mechanisch an der Kupplungswandung 22 des Kupplungsbauteils 12 an, was zu einer entsprechenden Reibung zwischen Fliehgewicht 14 und Kupplungswandung 22 führt. Diese Reibung erzeugt eine Kraft auf das Fliehgewicht 14 entgegen der Drehrichtung 20 des Rotors 10. Aufgrund der bewegbaren Anordnung des Fliehgewichtes 14 relativ zum Rotor 10 bewegt sich das Fliehgewicht 14 in Umfangsrichtung entgegen der Drehrichtung 20 des Rotors 10 und gleitet dabei entlang der Anlagefläche 16 auf dem Rotor 10. Je höher die Drehzahl des Rotors 10 ist, desto stärker wird das Fliehgewicht 14 radial gegen die Kupplungswandung 22 des Kupplungsbauteils 12 gedrückt und desto stärker ist die sich ergebende Reibungskraft, welche das Fliehgewicht 14 entlang der Anlagefläche 16 auf dem Rotor 10 entgegen der Drehrichtung 20 des Rotors 10 in Umfangsrichtung drückt.

Erfindungsgemäß ist die Anlagefläche 16 auf dem Rotor 10 derart ausgebildet, dass sich in Umfangsrichtung entgegengesetzt zur Drehrichtung 20 des Rotors 10 ein radialer Abstand zwischen der Kupplungswandung 22 und der Anlagefläche 16 verringert. Auf diese Weise unterstützt die Anlagefläche mit zunehmender Auslenkung bzw. Bewegung des Fliehgewichtes 14 in Umfangsrichtung entgegengesetzt zur Drehrichtung 20 des Rotors 10 ein radiales Andrücken des Fliehgewichtes 14 gegen die Kupplungswandung 22. Hierdurch wird ein mechanischer Kraftschluss zwischen dem Rotor 10 und dem Kupplungsbauteil 12 über die reine Zentripetalkraft hinaus verstärkt, so dass schon bei relativ geringen Drehzahlen des Rotors 10 ein hoher Kraftschluss zwischen dem Rotor 10 und dem Kupplungsbauteil 12 erzielt wird.

Fig. 2 veranschaulicht einen Zustand der Fliehkraftkupplung mit entsprechend hoher Drehzahl des Rotors 10, so dass das Fliehgewicht 14 in radialer Richtung und zusätzlich in Umfangsrichtung entgegengesetzt zur Drehrichtung 20 relativ zum Rotor 10 in eine zweite Stellung verschoben ist. Bei entsprechend steilem Anstieg der Anlagefläche 16 in Umfangsrichtung entgegengesetzt zur Drehrichtung 20 kann dabei die klemmende Wirkung zwischen der Anlagefläche 16 und der Kupplungswandung 22 so stark sein, dass selbst bei Stillstand des Rotors 10 aufgrund der bremsenden Wirkung des an der Kupplungsfläche 22 anschlagenden Fliehgewichtes 14 der Kraftschluss zwischen Rotor 10 und Kupplungsbauteil 12 erhalten bleibt, solange der Rotor 10 in Drehrichtung mit einem Drehmoment belastet ist. Eine Entlastung des Rotors 10 führt dann dazu, dass das federelastische Bauteil 24 das Fliehgewicht 14 aus der klemmenden Halterung zwischen Anlagefläche 16 und Kupplungswandung 22 wieder zurück in die erste Stellung gemäß Fig. 1 bewegt und dadurch der Rotor 10 wieder frei gegeben ist, d.h. wieder frei bezüglich des Kupplungsbauteils 12 drehen kann.

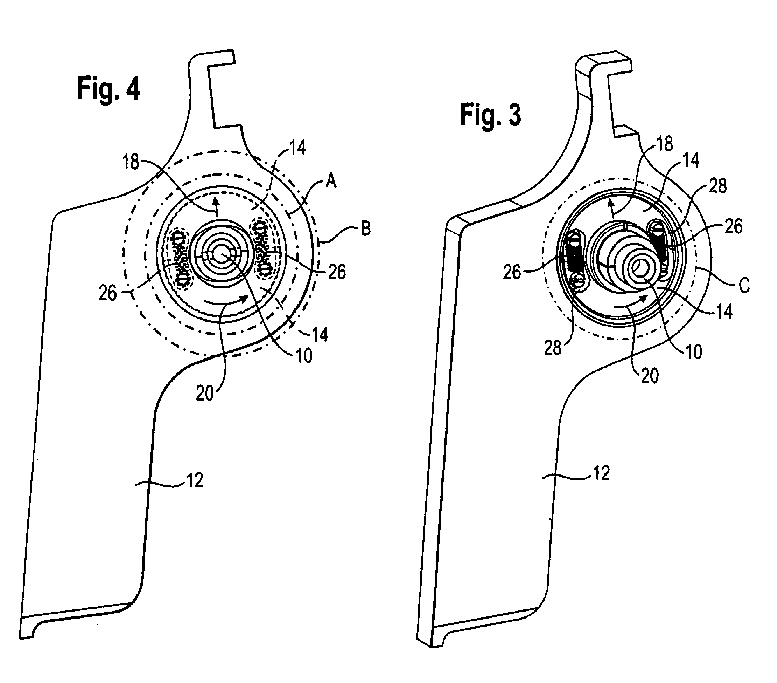

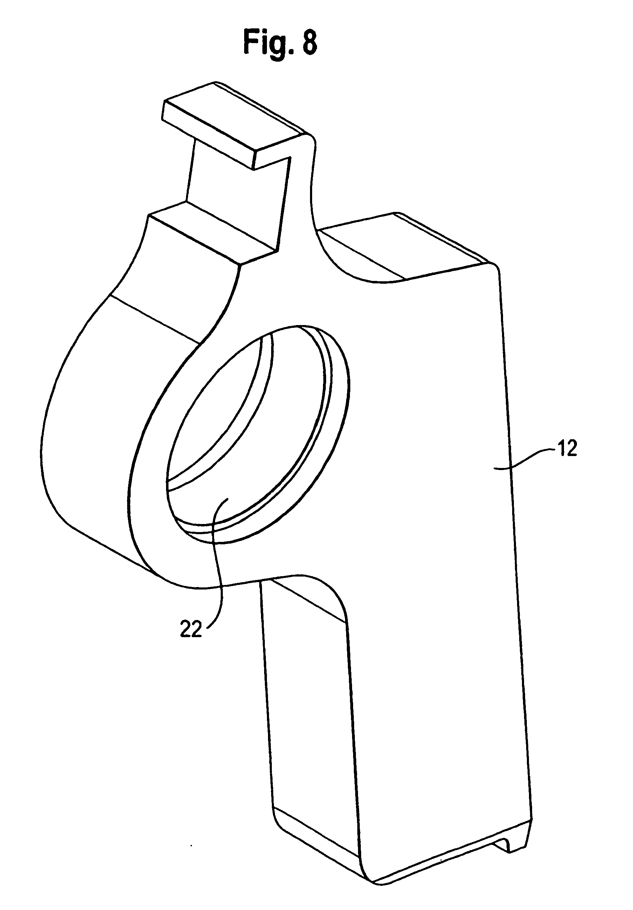

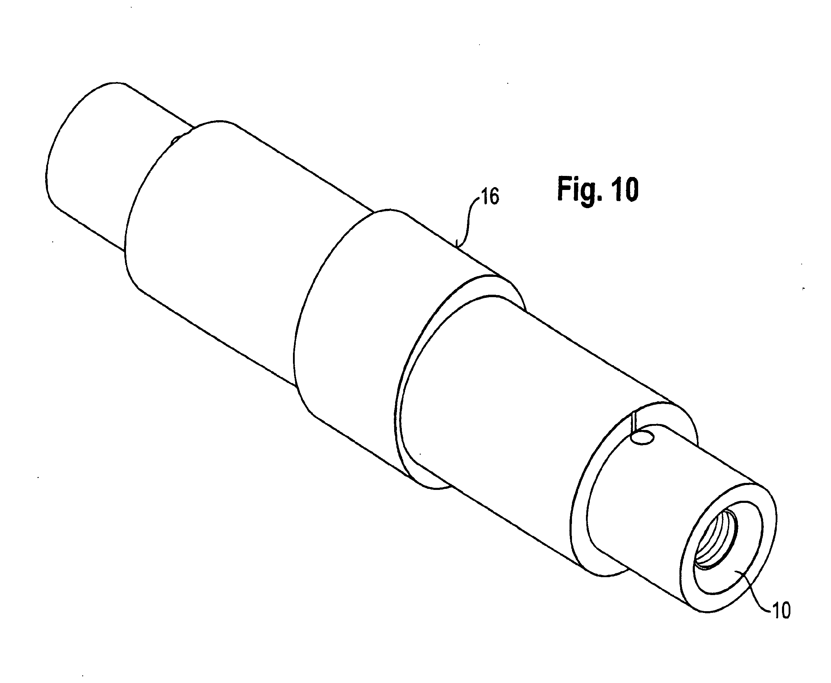

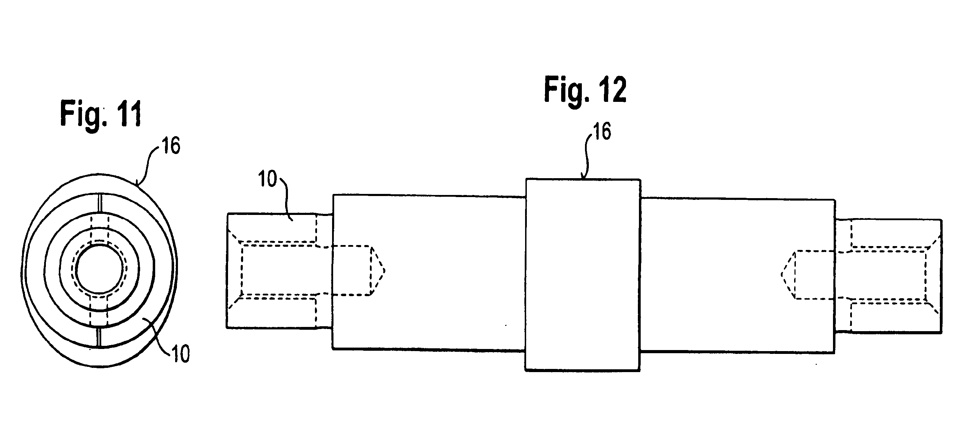

Fig. 3 bis 12 veranschaulichen eine zweite bevorzugte Ausführungsform einer erfindungsgemäßen Fliehkraftkupplung, wobei funktionsgleiche Teile mit gleichen Bezugszeichen versehen sind wir in Fig. 1 und 2, so dass zu deren Erläuterung auf die obige Beschreibung der Fig. 1 und 2 verwiesen wird. Im Unterschied zur ersten Ausführungsform sind zwei Fliehgewichte 14 vorgesehen, die beidseits des Rotors 10 über jeweilige federelastische Bauteile 26 miteinander derart verbunden sind, dass diese federelastischen Bauteile 26 die beiden Fliehgewichte 14 radial aufeinander zu mit eine Vorspannkraft beaufschlagt, so dass die Fliehgewichte 14 an gegenüberliegenden Seiten unter der Wirkung der federelastischen Bauteile 26 mechanisch an die Anlagefläche 16 des Rotors 10 anschlagen. Der Rotor 10 ist hierbei, anders als bei der ersten Ausführungsform gemäß Fig. 1 und 2, im Bereich der Anlagefläche 16 im Querschnitt oval ausgebildet, wie insbesondere aus Fig. 10 und 11 ersichtlich. Die Anordnung der Fliehgewichte 14 und der federelastischen Bauteile 26 ist dabei derart getroffen, dass in der ersten Stellung der Fliehgewichte 14 diese an einem Umfangsbereich des Rotors 10 an der Anlagefläche 16 anschlagen, in dem der Rotor 10 im Querschnitt der ovalen bzw. elliptischen Ausbildung eine minimale radiale Querschnittslänge bzw. Radius aufweist. Mit anderen Worten schlagen die Fliehgewichte 14 in der ersten Stellung im Bereich einer kleinen Achse der durch die Anlagefläche 16 im Querschnitt definierten Ellipse an.

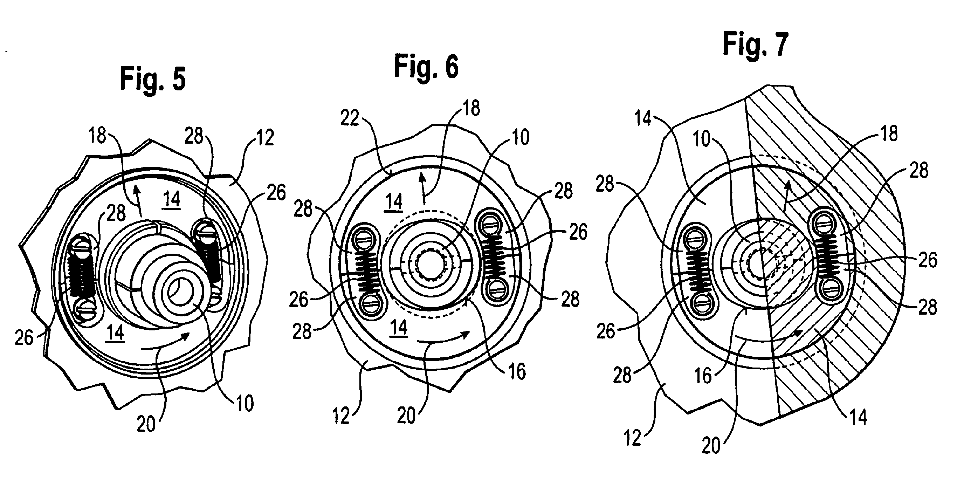

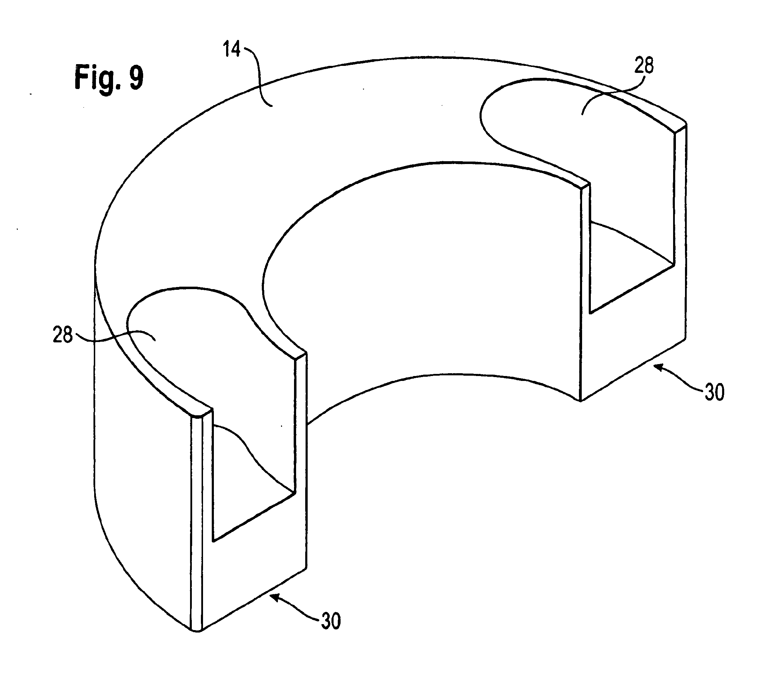

Die beiden Fliehgewichte 14 sind U-förmig mit freien Enden 30 ausgebildet, wie insbesondere aus Fig. 9 ersichtlich, wobei die freien Enden der beiden U-förmigen Fliehgewichte 14 einander zugewandt sind, wie insbesondere aus Fig. 5 bis 7 ersichtlich. An den freien Enden 30 der beiden U-förmigen Fliehgewichte 14 ist jeweils eine Ausnehmung 28 zur Aufnahme der federelastischen Bauteile 26 ausgebildet, wie insbesondere aus Fig. 6 und 9 ersichtlich. Die Fliehgewichte 14 sind bezüglich des Rotors 10 frei schwimmend innerhalb des Kupplungsgehäuses 12 angeordnet, so dass sich diese in Umfangsrichtung bezüglich des Rotors 10 bewegen können. Die Vorspannkraft der federelastischen Bauteile 26, die die Fliehgewichte 14 in radialer Richtung bezüglich des Rotors 10 zueinander zieht, führt dabei dazu, dass bei ruhendem Rotor 10 die Fliehgewichte 14 entlang der im Querschnitt ovalen Anlagefläche 16 gleiten, bis diese an der Stelle der Anlagefläche 16 mit kleinster radialer Querschnittslänge angelangt sind, da sich hier die niedrigste potentielle Energie für das federbelastete System aus Fliehgewichten 14, federelastischen Bauteile 26 und Anlagefläche 16 ergibt.

Mit zunehmender Drehzahl der Rotors 10 werden die Fliehgewichte 14 entgegen der rückstellenden Kraft der federelastischen Bauteile 26 aus der ersten Stellung heraus und in radialer Richtung 18 nach außen sowie voneinander weg bewegt, bis die Fliehgewichte 14 an der Kupplungswandung 22 anschlagen und eine kraftübertragende Verbindung mittels Reibung zwischen dem Rotor 10 und dem Kupplungsbauteil 12 herstellen. Dies führt zu einer entsprechenden, auf die Fliehgewichte 14 in Umfangsrichtung entgegengesetzt zur Drehrichtung 20 des Rotors 10 wirkenden Bremskraft. Wird diese Bremskraft groß genug, so dass die rückstellende Kraft der federelastischen Bauteile 26 in Umfangsrichtung in die in Fig. 4 dargestellte erste Stellung überwunden wird, so führt diese Bremskraft zu einer Bewegung der Fliehgewichte 14 in Umfangsrichtung entgegen der Drehrichtung 20 des Rotors 10 und die Fliehgewichte 14 gleiten entlang der ovalen Anlagefläche 16 weg von der ersten Stellung. Dies führt dazu, dass aufgrund der ovalen Ausbildung der Anlagefläche 16 die Fliehgewichte 14 zusätzlich gegen die Kupplungswandung 22 gedrückt werden, da sich ausgehend von der ersten Stellung in Umfangsrichtung gesehen ein radialer Abstand zwischen der Anlagefläche 16 und der Kupplungswandung 22 verringert. Dies verstärkt den Kraftschluss zwischen dem Rotor 10 und dem Kupplungsbauteil 12 über die Reibungskraft allein aufgrund der auf die Fliehgewichte 14 wirkenden Zentripetalkraft hinaus, so dass bereits bei niedrigen Drehzahlen hohe Kräfte zwischen dem Rotor 10 und dem Kupplungsbauteil 12 übertragen werden können.

Die ovale Ausbildung der Anlagefläche 16 auf dem Rotor 10 ist bevorzugt derart ausgebildet, dass ein radialer Abstand zwischen der Anlagefläche 16 und der Kupplungswandung 22 an einer Stelle mit größtem radialen Durchmesser des Rotors 10 kleiner ist als eine radiale Abmessung eines der Fliehgewichte 14. Auf diese Weise ist ein Durchrutschen des Rotors 10 relativ zu den Fliehgewichten 14 verhindert oder mit anderen Worten ist die Bewegung der Fliehgewichte 14 relativ zum Rotor 10 in Umfangsrichtung auf einen vorbestimmten Winkelbereich begrenzt, wobei dieser Winkelbereich beispielsweise kleiner oder gleich 90 Grad ist.

Aus den Fig. 10 und 12 ist ersichtlich, dass die Anlagefläche 16 nur auf einem begrenzten Bereich des Rotors 10 in axialer Richtung ausgebildet ist. Auch ist der Rotor 10 nur in diesem Bereich mit Anlagefläche 16 an seinen Außenumfang im Querschnitt oval bzw. elliptisch ausgebildet.

Obwohl bei den beiden zuvor beschriebenen Ausführungsformen für eine erfindungsgemäße Fliehkraftkupplung gemäß der Fig. 1 bis 12 eine bestimmte Vorzugsrichtung für die Drehrichtung 20 des Rotors 10 dargestellt ist, soll dies keine Einschränkung auf Fliehkraftkupplungen mit nur einer Drehrichtung 20 des Rotors 10 bedeuten. Vielmehr kann sich der Rotor 10 wahlweise in die eine oder andere Richtung drehen. Jedoch ist die Bewegung des bzw. der Fliehgewichte 14 in Umfangsrichtung relativ zum Rotor 10 immer entgegengesetzt zur Drehrichtung 20 des Rotors 10 gerichtet.

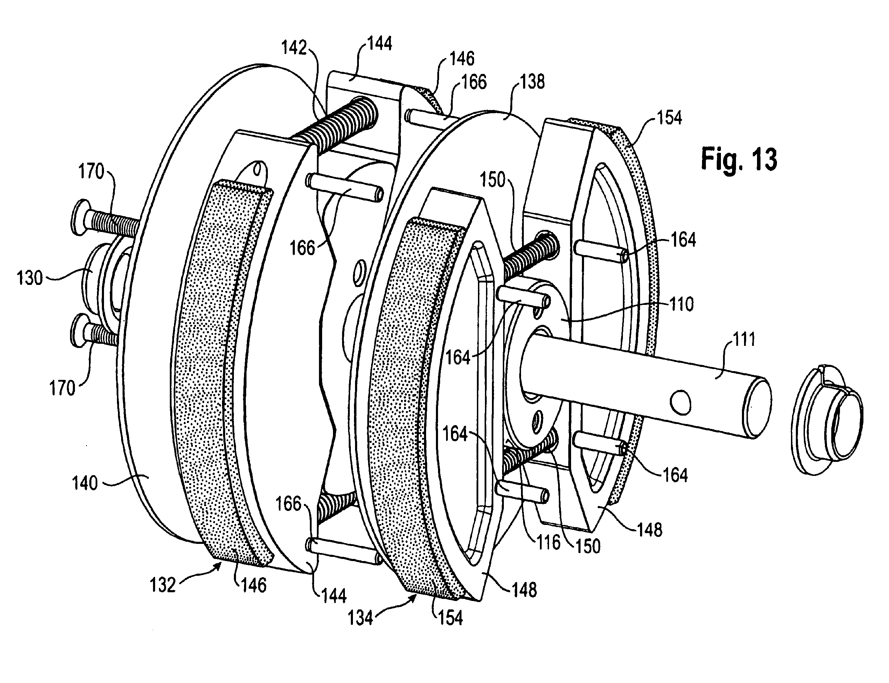

Die in Fig. 13 dargestellte, bevorzugte Ausführungsform eines erfindungsgemäßen Abseilgerätes umfasst eine Achse 111. Auf der Achse 111 ist eine Bundbuchse 130, eine erste Fliehkraftkupplung 132 und eine zweite Fliehkraftkupplung 134 angeordnet. Ein nicht dargestelltes Gehäuse bildet eine Kupplungswandung aus, die um die erste und zweite Fliehkraftkupplung 132 und 134 angeordnet ist analog wie die Kupplungswandung 22 der ersten bzw. zweiten Ausführungsform.

Die erste Fliehkraftkupplung 132 ist axial beidseitig mit jeweils einem Deckel 138 und 140 versehen. Die erste Fliehkraftkupplung 132 umfasst erste Zugfedern 142, die zwei erste Fliehgewichte 144 radial zusammen bzw. nach innen weg von der Kupplungswandung drücken. Jedes erste Fliehgewicht 144 weist an dessen der Kupplungswandung zugewandten Seite einen ersten Bremsbelag 146 auf, der bei einer radialen Bewegung des ersten Fliehgewichtes 144 nach außen aufgrund einer Zentripetalkraft an die Kupplungswandung mechanisch anschlägt und eine Reibverbindung herstellt.

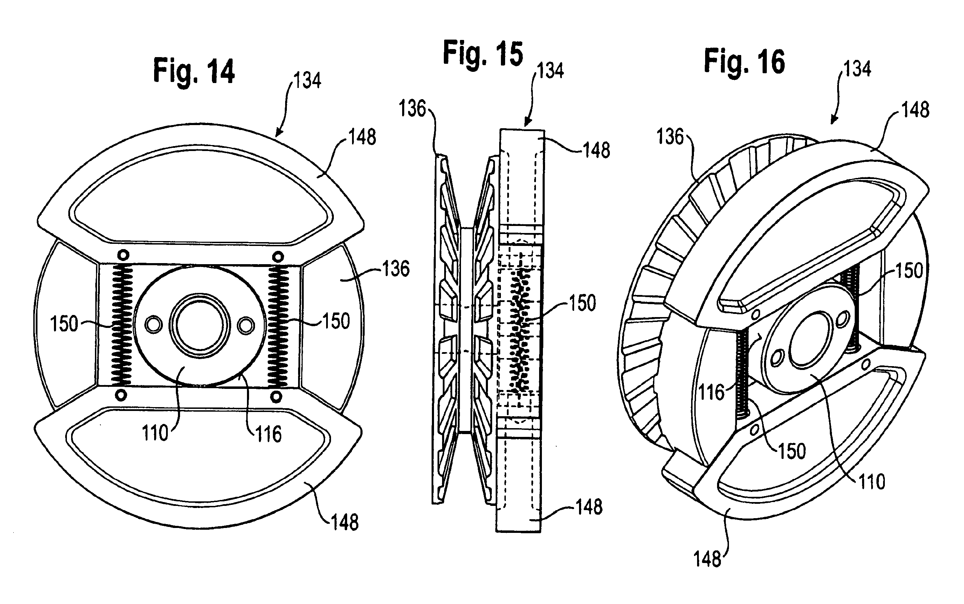

Die zweite Fliehkraftkupplung 134 weist, wie auch aus Fig. 14 bis 16 ersichtlich, zwei zweite Fliehgewichte 148 auf, die von zwei zweiten Zugfedern 150 radial zusammen und gegen eine Anlagefläche 116 auf einem Rotor 110 gezogen werden. Die zweiten Fliehgewichte 148 sind, analog zur zweiten Ausführungsform einer Fliehkraftkupplung gemäß der Fig. 3 bis 12, in Umfangsrichtung bewegbar relativ zum Rotor 110 gelagert, wobei die Anlagefläche 116, analog wie die Anlagefläche 16, im Querschnitt oval bzw. ellipsenförmig ausgebildet ist. Somit entspricht die zweite Fliehkraftkupplung 134 in ihrer Funktion der zweiten Ausführungsform einer Fliehkraftkupplung gemäß der Fig. 3 bis 12, so dass zur Erläuterung der Funktion auf die obige Beschreibung der Fig. 3 bis 12 verwiesen wird. Auch bei dieser zweiten Fliehkraftkupplung 134 ergibt sich dementsprechend durch eine Bewegung der zweiten Fliehgewichte 148 in Umfangsrichtung entgegengesetzt zur Drehrichtung des Rotors 110 eine Verstärkung der Andruckkraft der zweiten Fliehgewichte 148 gegen die Kupplungswandung. Im Unterschied zu den Fliehgewichten 14 der zweiten Ausführungsform einer Fliehkraftkupplung gemäß der Fig. 3 bis 12 sind die zweiten Fliehgewichte 148 nicht U-förmig, sondern D-förmig ausgebildet. An jeweiligen, der Kupplungswandung zugewandten Seiten der zweiten Fliehgewichte 148 sind zweite Bremsbeläge 154 angeordnet, die bei einer radialen Bewegung der zweiten Fliehgewichte 148 nach außen aufgrund einer Zentripetalkraft an die Kupplungswandung mechanisch anschlagen und eine Reibverbindung herstellen. Der Rotor 110 ist drehbar auf der Achse 111 angeordnet. Lediglich beispielhaft ist in Fig. 14 bis 16 zusätzlich eine an der zweiten Fliehkraftkupplung 134 angeordnete Seilrolle 136 für ein Sicherungsseil (nicht dargestellt) dargestellt.

Die erste Fliehkraftkupplung 132 ist ebenfalls auf dem Rotor 110 und somit drehbar bzgl. der Achse 111 sowie drehfest bezüglich der zweiten Fliehkraftkupplung 134 angeordnet. Die Deckel 138 und 140 sind drehfest mit dem Rotor 110 verbunden. Durch Reibung zwischen den zweiten Fliehgewichten 148 und dem Deckel 138 wird die Drehbewegung auch auf den Rotor 110 und damit auf die erste Fliehkraftkupplung 132 übertragen. Im Bereich der ersten Fliehkraftkupplung 132 ist der Rotor 110 gezahnt ausgebildet und die ersten Fliehgewichte 144 sind an ihrer dem Rotor 110 zugewandten Seite passend dazu gezahnt ausgebildet, so dass die ersten Fliehgewichte 144 und der Rotor 110 formschlüssig und dadurch im Wesentlichen drehfest miteinander verbunden sind.

Die zweiten Fliehgewichten 148 können sich, analog wie bei der zweiten Ausführungsform einer Fliehkraftkupplung gemäß der Fig. 3 bis 12, in Umfangsrichtung relativ zum Rotor 110 bewegen und dadurch entlang der ovalen Anlagefläche 116 gleiten. Durch die ovale Ausbildung der Anlagefläche 116 ergibt sich, analog wie bei der zweiten Ausführungsform einer Fliehkraftkupplung gemäß der Fig. 3 bis 12, eine Verringerung des radialen Abstandes zwischen der Kupplungswandung und der Anlagefläche 116 ausgehend von der ersten Stellung der zweiten Fliehgewichte 148 in Umfangsrichtung gesehen. Durch die Symmetrie der ovalen Ausbildung der Anlagefläche 116 ist die Funktion der Reibungs- bzw. Bremskraftverstärkung durch die Bewegung der zweiten Fliehgewichten 148 in Umfangsrichtung unabhängig von der Drehrichtung des Rotors 110 bzw. der Achse 111 bzw. eines Sicherungsseiles, welches mit entsprechenden Mittel beispielsweise direkt oder über ein Getriebe drehend mit der Achse 111 verbunden ist.

Die zweiten Fliehgewichte 148 sind auf dem Rotor 110 bevorzugt rollengelagert, damit die Bremse leicht läuft und nicht hakt. Es ist allerdings auch eine gleitende Lagerung möglich. Die zweiten Fliehgewichte 148 verlassen die in den Fig. 13 bis 16 dargestellte erste Stellung aufgrund der auf diese wirkende Zentripetalkraft, wenn sich die Achse 111 schnell genug dreht. Die sich dadurch ergebende Bremswirkung aufgrund der Reibung zwischen den zweiten Bremsbelägen 154 und der Kupplungswandung wird auf ein entsprechendes Sicherungsseil.

Eine Bewegung des Sicherungsseiles führt zu einer Rotation der Achse 111, wenn sich eine abzuseilende Person an einem der aus dem Abseilgerät kommenden Sicherungsseil einhakt und fallen lässt. Das Seil wird im Wesentlichen schlupffrei durch das Abseilgerät gezogen. Die Anordnung der ersten und zweiten Fliehkraftkupplung sorgen dabei für eine konstante und relativ niedrige Abseilgeschwindigkeit, so dass die abzuseilende Person beim Erreichen des Bodens nicht hart aufschlägt und keine Verletzungen erleidet.

Das Abseilgerät umfasst ferner folgende Bauteile, zweite Spannstifte 164, die axial durch die zweiten Fliehgewichte 148 greifen und an denen die zweiten Zugfedern 150 befestigt sind, erste Spannstifte 166, die durch die ersten Fliehgewichte 144 greifen und an denen die ersten Zugfedern 142 befestigt sind und Innensechskantschrauben 170, die den Rotor 110 und die Deckel 138, 140 drehfest miteinander verbinden.

Durch die erfindungsgemäße Ausbildung des Abseilgerätes gemäß Fig. 13 bis 16 mit der zweiten Fliehkraftkupplung kann auf ein Getriebe im Abseilgerät verzichtet werden, wobei gleichzeitig hohe Bremswerte bereits bei geringen Drehzahlen erreicht werden. Eine Seilrolle bzw. Seilscheibe überträgt eine Bewegung des Sicherungsseiles als Rotation auf die Achse 111 und damit auf die zweiten Fliehgewichte 148 der zweiten Fliehkraftkupplung 134. Diese zweiten Fliehgewichte 148 schieben sich gegen den exzentrischen geformten Rotor 110. Würde der Rotor 110 in der Mitte fest stehen, so würden die zweiten Fliehgewichte 148 klemmen und stünden fest. Der Rotor 110 ist daher drehbar und kraftschlüssig mit der ersten Fliehkraftbremse 132 montiert und dreht mit. Kommen aufgrund der Drehzahl der Achse 111 auch die ersten Fliehgewichte 144 der ersten Fliehkraftkupplung 132 in Eingriff mit der Kupplungswandung, so wird auch der Rotor 110 abgebremst. Die zweiten Fliehgewichte 148 schieben sich über die exzentrische Anlagefläche 116 nach außen. Hierdurch muss die eigentliche Fliehkraftbremse nur wenig Bremsmoment erbringen, was bereits bei niedrigen Drehzahlen der Seilrolle möglich ist. Die Bremswirkung der zweiten Fliehkraftbremse 134 (Exzenterbremse) wird durch die exzentrische Anlagefläche 116 derart verstärkt, dass ein hohes Moment aufgenommen wird bzw. bereits bei niedrigen Drehzahlen der Seilrolle eine Verbindung zwischen den zweiten Fliehgewichten 148 und dem Gehäuse mit hoher Reibungskraft und somit hoher Bremskraft erzeugt wird.

## Patentansprüche

1. Fliehkraftkupplung mit einem Rotor (10; 110) und einem Kupplungsbauteil (12; 112), wobei am Rotor (10; 110) wenigstens ein Fliehgewicht (14; 148), insbesondere zwei Fliehgewichte (14; 148), relativ zum Rotor (10; 110) in radialer Richtung (18) bewegbar derart angeordnet und ausgebildet ist, dass unterhalb einer vorbestimmten Drehzahl des Rotors (10; 110) das Fliehgewicht (14; 148) beabstandet von dem Kupplungsbauteil (12; 112) an dem Rotor (10; 110) in einer ersten Stellung angeordnet ist, so dass der Rotor (10; 110) relativ zum Kupplungsbauteil (12; 112) frei drehbar ist, und oberhalb der vorbestimmten Drehzahl des Rotors (10; 110) unter einer Zentripetalkraft eine radiale Bewegung relativ zum Rotor (10; 110) in eine zweite Stellung ausführt, so dass das Fliehgewicht (14; 148) an einer Kupplungswandung (22, 122) des Kupplungsbauteiles (12; 112) anschlägt und einen mechanischen Kraftschluss zwischen dem Rotor (10; 110) und dem Kupplungsbauteil (12; 112) herstellt, und wobei das Fliehgewicht (14; 148) an dem Rotor (10; 110) zusätzlich in Umfangsrichtung wenigstens entgegen der Drehrichtung (20) des Rotors (10; 110) bewegbar angeordnet ist, wobei eine Anlagefläche (16; 116) zwischen dem Rotor (10; 110) und dem Fliehgewicht (14; 148) derart ausgebildet ist, dass sich ausgehend von der ersten Stellung in Umfangsrichtung wenigstens entgegen der Drehrichtung (20) des Rotors (10; 110) gesehen ein Abstand zwischen der Anlagefläche (16; 116) und der Kupplungswandung (22, 122) des Kupplungsbauteils (12; 112) verringert, **dadurch gekennzeichnet, dass** der Rotor (10; 110) an seinem Umfang im Bereich der Anlagefläche (16; 116) zwischen Rotor (10; 110) und Fliehgewicht (14; 148) im Querschnitt oval ausgebildet ist, wobei das Fliehgewicht (14; 148) derart angeordnet ist, dass es in der ersten Stellung in einem Bereich der ovalen Anlagefläche (16; 116) anschlägt, in dem die ovale Anlagefläche (16; 116) in radialer Richtung den kleinsten Querschnitt bzw. die kleinste Querschnittslänge aufweist..

2. Fliehkraftkupplung nach Anspruch 1, **dadurch gekennzeichnet, dass** das Fliehgewicht (14; 148) derart an dem Rotor (10; 110) angeordnet ist, dass die Bewegung in Umfangsrichtung erst freigegeben ist, wenn das Fliehgewicht (14; 148) die zweite Stellung erreicht.

3. Fliehkraftkupplung nach Anspruch 1 oder 2, **dadurch gekennzeichnet, dass** die Anlagefläche (16; 116) derart ausgebildet ist, dass sich der Abstand zur Kupplungswandung (22, 122) bis zu einem Wert verringert, welcher kleiner ist als eine Breite des Fliehgewichtes (14; 148) in radialer Richtung bzgl. des Rotors (10; 110).

4. Fliehkraftkupplung nach wenigstens einem der vorhergehenden Ansprüche, **dadurch gekennzeichnet, dass** zwei Fliehgewichte (14; 148) vorgesehen sind, die beabstandet von dem Rotor (10; 110) und beidseits des Rotors (10; 110) mittels wenigstens zweier federelastischer Elemente (26; 150) miteinander derart verbunden sind, dass die federelastischen Elemente (26; 150) die Fliehgewichte (14; 148) radial zueinander mit Kraft beaufschlagen und gegen die Anlagefläche (16; 116) auf dem Rotor (10; 110) drücken.

5. Fliehkraftkupplung nach Anspruch 4, **dadurch gekennzeichnet, dass** die Fliehgewichte (14; 148) zwischen sich im Querschnitt eine ovale Öffnung ausbilden, die die ovale Anlagefläche (16; 116) des Rotors (10; 110) umgreift.

6. Fliehkraftkupplung nach wenigstens einem der vorhergehenden Ansprüche, **dadurch gekennzeichnet, dass** das Fliehgewicht (14; 148) als Ringsegment, insbesondere Halbringsegment, oder D-förmig oder U-förmig ausgebildet ist.

7. Fliehkraftkupplung nach Anspruch 6, **dadurch gekennzeichnet, dass** an freien Enden des Fliehgewichtes (14) Ausnehmungen zur Aufnahme eines Federelementes (26) ausgebildet sind.

8. Fliehkraftkupplung nach wenigstens einem der vorhergehenden Ansprüche, **dadurch gekennzeichnet, dass** die Kupplungswandung (22, 122) des Kupplungsbauteils (12; 112) den Rotor (10; 110) radial umgibt.

9. Abseilvorrichtung für ein Sicherungsseil mit
- einer Achse (111),
- einer auf der Achse (111) angeordneten ersten Bremsvorrichtung (132) und
- einer zweiten Bremsvorrichtung (134), welche auf derselben Achse (111) angeordnet ist, wie die erste Bremsvorrichtung (132),
- wobei die erste Bremseinrichtung (132) eine Fliehkraftkupplung mit Fliehgewichten (144) umfasst; **dadurch gekennzeichnet,**
- **dass** die zweite Bremsvorrichtung (134) als Fliehkraftkupplung ausgebildet ist, mit einem Rotor (110) und einem Kupplungsbauteil, wobei am Rotor (110) wenigstens ein Fliehgewicht (148) relativ zum Rotor (110) in radialer Richtung bewegbar derart angeordnet und ausgebildet ist, dass unterhalb einer vorbestimmten Drehzahl des Rotors (110) das Fliehgewicht (148) beabstandet von dem Kupplungsbauteil an dem Rotor (110) in einer ersten Stellung angeordnet ist, so dass der Rotor (110) relativ zum Kupplungsbauteil frei drehbar ist, und oberhalb der vorbestimmten Drehzahl des Rotors (110) unter einer Zentripetalkraft eine radiale Bewegung relativ zum Rotor (110) in eine zweite Stellung ausführt, so dass das Fliehgewicht (148) an einer Kupplungswandung des Kupplungsbauteiles anschlägt und einen mechanischen Kraftschluss zwischen dem Rotor (110) und dem Kupplungsbauteil herstellt, und wobei das Fliehgewicht (148) an dem Rotor (110) zusätzlich in Umfangsrichtung wenigstens entgegen der Drehrichtung des Rotors (110) bewegbar angeordnet ist, wobei eine Anlagefläche (116) zwischen dem Rotor (110) und dem Fliehgewicht (148) derart ausgebildet ist, dass sich ausgehend von der ersten Stellung in Umfangsrichtung wenigstens entgegen der Drehrichtung des Rotors (110) gesehen ein Abstand zwischen der Anlagefläche (116) und der Kupplungswandung des Kupplungsbauteils verringert, und
- **dass** die erste Bremsvorrichtung (132) drehfest mit dem Rotor (110) verbunden ist, so dass ein drehzahlbedingter Eingriff der Fliehgewichte (144) der ersten Bremsvorrichtung (132) mit einer Kupplungswandung zu einem Abbremsen des Rotors (110) führt, wodurch sich ein Abstand zwischen der Anlagefläche (116) und der Kupplungswandung des Kupplungsbauteils der zweiten Bremsvorrichtung (134) verringert.

10. Abseilvorrichtung nach Anspruch 9, **dadurch gekennzeichnet, dass** das Kupplungsbauteil ein Gehäuse umfasst, wobei die Kupplungswandung in dem Gehäuse ausgebildet ist.

11. Abseilvorrichtung nach einem der Ansprüche 9 oder 10, **dadurch gekennzeichnet, dass** die erste Bremsvorrichtung (132) und die zweite Bremsvorrichtung (134) gemeinsam auf dem Rotor (110) angeordnet sind.

12. Abseilvorrichtung nach Anspruch 11, **dadurch gekennzeichnet, dass** der Rotor (110) drehbar bezüglich der Achse (111) und koaxial zur Achse (111) angeordnet ist.

13. Abseilvorrichtung nach Anspruch 12, **dadurch gekennzeichnet, dass** der Rotor (110) und die zweite Bremsvorrichtung (134) derart ausgebildet und angeordnet sind, dass eine reibschlüssige Verbindung zwischen dem Sicherungsseil und dem Rotor (119) hergestellt ist.

14. Abseilvorrichtung nach Anspruch 13, **dadurch gekennzeichnet, dass** der Rotor (110) einen drehfest mit diesem verbundenen Deckel (138) aufweist, welcher axial zwischen der ersten und zweiten Bremsvorrichtung (132, 134) derart angeordnet ist, dass das wenigstens eine Fliehgewicht (148) der zweiten Bremsvorrichtung (134) eine reibschlüssige Verbindung zu dem Deckel (138) herstellt.

15. Abseilvorrichtung nach wenigstens einem der Ansprüche 9 bis 14, **dadurch gekennzeichnet, dass** eine Seilrolle für das Sicherungsseil vorgesehen ist, welche wenigstens einen Mitnehmer aufweist, der an wenigstens einem Fliehgewicht (148) der zweiten Bremsvorrichtung (134) anschlägt, so dass ein Formschluss zwischen dem Fliehgewicht (148) und der Seilrolle hergestellt ist.

16. Abseilvorrichtung nach Anspruch 15, wobei die zweite Bremsvorrichtung (134) als Fliehkraftkupplung mit zwei Fliehgewichten (148) ausgebildet ist, die beabstandet von dem Rotor (110) und beidseits des Rotors (110) mittels wenigstens zweier federelastischer Elemente (150) miteinander derart verbunden sind, dass die federelastischen Elemente (150) die Fliehgewichte (148) radial zueinander mit Kraft beaufschlagen und gegen die Anlagefläche (116) auf dem Rotor (110) drücken **dadurch gekennzeichnet, dass** zwei Mitnehmer ausgebildet sind, die axial in Zwischenräume zwischen den zwei Fliehgewichten (148) der zweiten Bremsvorrichtung (134) greifen.

17. Abseilvorrichtung nach wenigstens einem der Ansprüche 15 oder 16, **dadurch gekennzeichnet, dass** der wenigstens eine Mitnehmer einstückig mit der Seilrolle ausgebildet ist.

18. Auffanggerät, insbesondere Steigschutzläufer, welches mit einer zu sichernden Person an einer als Sicherungseinrichtung dienenden beweglichen oder festen Führung, insbesondere Sicherungsschiene, Steigschutzleiter oder Sicherungsseil, mitläuft, mit einer Fliehkraftkupplung,
**dadurch gekennzeichnet,**
**dass** die Fliehkraftkupplung gemäß wenigstens einem der Ansprüche 1 bis 8 ausgebildet ist.

## Claims

1. Centrifugal clutch having a rotor (10, 110) and a coupling component (12, 112) of the clutch, at least one centrifugal weight (14, 148), and in particular two centrifugal weights (14, 148) being arranged on the rotor (10, 110), and designed, to be movable relative to the rotor (10, 110) in the radial direction (18), in such a way that, below a predetermined speed of revolution of the rotor (10, 110), the centrifugal weight (14, 148) is arranged on the rotor (10, 110) in a first position spaced away from the coupling component (12, 112) of the clutch, the rotor (10, 110) thus being freely rotatable relative to the coupling component (12, 112) of the clutch, and in such a way that, above the predetermined speed of revolution of the rotor (10, 110), the centrifugal weight (14, 148) performs a radial movement relative to the rotor (10, 110) under a centripetal force to a second position, the centrifugal weight (14, 148) thus abutting against a coupling wall (22, 122) of the coupling component (12, 112) of the clutch and making a mechanical connection by applied force between the rotor (10, 110) and the coupling component (12, 112) of the clutch, and the centrifugal weight (14, 148) being arranged to be movable on the rotor (10, 110) in the circumferential direction in addition, at least in the opposite direction from the direction of rotation (20) of the rotor (10, 110), a surface for contact (16, 116) between the rotor (10, 110) and the centrifugal weight (14, 148) being so formed that, starting from the first position, a distance between the surface for contact (16, 116) and the coupling wall (22, 122) of the coupling component (12, 112) of the clutch becomes smaller in the circumferential direction at least in the opposite direction from the direction of rotation (20) of the rotor (10, 110), **characterised in that**, at its circumference, the rotor (10, 110) is of an oval form in cross-section in the region of the surface for contact (16, 116) between the rotor (10, 110) and the centrifugal weight (14, 148), the centrifugal weight (14, 148) being so arranged that it abuts, in the first position, in a region of the oval surface for contact (16, 116) in which, in the radial direction, the cross-section, or rather the length in cross-section, of the said oval surface for contact (16, 116) is smallest.

2. Centrifugal clutch according to claim 1, **characterised in that** centrifugal weight (14, 148) is arranged on the rotor (10, 110) in such a way that the movement in the circumferential direction is not released until the centrifugal weight (14, 148) reaches the second position.

3. Centrifugal clutch according to claim 1 or 2, **characterised in that** the surface for contact (16, 116) is so designed that the distance from the coupling wall (22, 122) becomes smaller down to a value which is smaller than a width of the centrifugal weight (14, 148) in the radial direction relative to the rotor (10, 110).

4. Centrifugal clutch according to at least one of the preceding claims, **characterised in that** two centrifugal weights (14, 148) are provided which, at a spacing from the rotor (10, 110) and on both sides of the rotor (10, 110), are connected together by means of at least two resilient members (26, 150) in such a way that the resilient members (26, 150) apply the centrifugal weights (14, 148) to one another radially with force and press them against the surface for contact (16, 116) on the rotor (10, 110).

5. Centrifugal clutch according to claim 4, **characterised in that** the centrifugal weights (14, 148) form between them in cross-section an oval opening which fits round the oval surface for contact (16, 116) of the rotor (10, 110).

6. Centrifugal clutch according to at least one of the preceding claims, **characterised in that** the centrifugal weight (14, 148) takes the form of a sector of a circle forming a part-annulus, and in particular a half-annulus, or is D-shaped or U-shaped.

7. Centrifugal clutch according to claim 6, **characterised in that** recesses to receive a spring member (26) are formed in the free ends of the centrifugal weight (14).

8. Centrifugal clutch according to at least one of the preceding claims, **characterised in that** the coupling wall (22, 122) of the coupling component (12, 112) of the clutch surrounds the rotor (10, 110) circumferentially.

9. Abseiling device for a safety cable, having
- a shaft (111),
- a first braking device (132) arranged on the shaft (111) and
- a second braking device (134) which is arranged on the same shaft (111) as the first braking device (132),
- the first braking device (132) having a centrifugal clutch having centrifugal weights (144),
**characterised in that**
- the second braking device (134) takes the form of a centrifugal clutch having a rotor (110) and a coupling component of the clutch, at least one centrifugal weight (148) being arranged on the rotor (110), and designed, to be movable relative to the rotor (110) in the radial direction, in such a way that, below a predetermined speed of revolution of the rotor (110), the centrifugal weight (148) is arranged on the rotor (110) in a first position spaced away from the coupling component of the clutch, the rotor (110) thus being freely rotatable relative to the coupling component of the clutch, and in such a way that, above the predetermined speed of revolution of the rotor (110), the centrifugal weight (148) performs a radial movement relative to the rotor (110) under a centripetal force to a second position, the centrifugal weight (148) thus abutting against a coupling wall of the coupling component of the clutch and making a mechanical connection by applied force between the rotor (110) and the coupling component of the clutch, and the centrifugal weight (148) being arranged to be movable on the rotor (110) in the circumferential direction in addition, at least in the opposite direction from the direction of rotation of the rotor (110), a surface for contact (116) between the rotor (110) and the centrifugal weight (148) being so formed that, starting from the first position, a distance between the surface for contact (116) and the coupling wall of the coupling component of the clutch becomes smaller in the circumferential direction at least in the opposite direction from the direction of rotation of the rotor (110), and
- **in that** the first braking device (132) is connected to the rotor (110) to be solid in rotation therewith, an engagement, due to speed of revolution, of the centrifugal weights (144) of the first braking device (132) with a coupling wall thus resulting in the rotor (110) being braked, as a result of which a distance between the surface for contact (116) and the coupling wall of the coupling component of the second braking device (134) becomes smaller.

10. Abseiling device according to claim 9, **characterised in that** the coupling component of the clutches comprises a housing, with the coupling wall being formed in the housing.

11. Abseiling device according to either of claims 9 and 10, **characterised in that** the first braking device (132) and the second braking device (134) are arranged on the rotor (110) together.

12. Abseiling device according to claim 11, **characterised in that** the rotor (110) is arranged to be rotatable relative to the shaft (111) and co-axial to the shaft (111).

13. Abseiling device according to claim 12, **characterised in that** the rotor (110) and the second braking device (134) are so designed and arranged that a frictional connection is made between the safety cable and the rotor (119).

14. Abseiling device according to claim 13, **characterised in that** the rotor (110) has a cover (138) which is connected thereto to be solid in rotation therewith and which is so arranged between the first braking device (132) and the second braking device (134) that at least one centrifugal weight (148) of the second braking device (134) makes a frictional connection to the cover (138).

15. Abseiling device according to at least one of claims 9 to 14, **characterised in that** there is provided for the safety cable a cable pulley which has at least one entraining means which abuts against at least one centrifugal weight (148) of the second braking device (134), a positively interengaged connection thus being made between the centrifugal weight (148) and the cable pulley.

16. Abseiling device according to claim 15, wherein the second braking device (134) takes the form of a centrifugal clutch having two centrifugal weights (148) which, at a spacing from the rotor (110) and on both sides of the rotor (110) are connected together by means of at least two resilient members (150) in such a way that the resilient members (150) apply the centrifugal weights (148) to one another radially with force and press them against the surface for contact (116) on the rotor (110), **characterised in that** two entraining members are formed which engage axially in gaps between the two centrifugal weights (148) of the second braking device (134).

17. Abseiling device according to at least one of claims 15 and 16, **characterised in that** the at least one entraining member is formed in one piece with the cable pulley.

18. Fall arrest device, and in particular a runner for fall protection, which travels with a person to be safeguarded on a movable or fixed guide which acts as a safeguarding means and in particular on a safety rail, a fall protected ladder or a safety cable and which has a centrifugal clutch, **characterised in that** the centrifugal clutch is of a form as specified in at least one of claims 1 to 8.

## Revendications

1. Bloqueur centrifuge comprenant un rotor (10 ; 110) et un composant de blocage (12 ; 112), dans lequel au moins une masse d'inertie (14 ; 148), et en particulier deux masses d'inertie (14 ; 148), est agencée sur le rotor (10 ; 110) avec possibilité de déplacement en direction radiale (18) par rapport au rotor (10 ; 110) et est réalisée de telle façon qu'au-dessous d'une vitesse de rotation prédéterminée du rotor (10; 110) la masse d'inertie (14 ; 148) est agencée à distance du composant de blocage (12 ; 112) sur le rotor (10 ; 110) dans une première position de telle sorte que le rotor (10 ; 110) est librement rotatif par rapport au composant de blocage (12 ; 112) et, au-dessus de la vitesse de rotation prédéterminée du rotor (10 ; 110), sous une force centripète il exécute un mouvement radial par rapport au rotor (10 ; 110) jusque dans une seconde position de telle sorte que la masse d'inertie (14 ; 148) vient buter contre une paroi de blocage (22, 122) du composant de blocage (12 ; 112) et établit une coopération de forces mécanique entre le rotor (10 ; 110) et le composant de blocage (12 ; 112), et dans lequel la masse d'inertie (14 ; 148) est additionnellement agencée déplaçable en direction périphérique au moins en sens contraire au sens de rotation (20) du rotor (10 ; 110), et une surface de contact (16 ; 116) entre le rotor (10 ; 110) et la masse d'inertie (14 ; 148) est réalisée de telle façon qu'en partant de la première position, une distance, vue en direction périphérique au moins en sens contraire au sens de rotation (20) du rotor (10 ; 110), entre la surface de contact (16 ; 116) et la paroi de blocage (22 ; 122) du composant de blocage (12 ; 112) diminue,
**caractérisé en ce que** le rotor (10 ; 110) est réalisé avec une section transversale ovale à sa périphérie dans la région de la surface de contact (16 ; 116) entre le rotor (10 ; 110) et la masse d'inertie (14 ; 148), et la masse d'inertie (14 ; 148) est agencée de telle façon que, dans la première position, elle vient buter dans une région de la surface de contact ovale (16 ; 116) dans laquelle la surface de contact ovale (16 ; 116) présente en direction radiale la plus petite section transversale ou la plus petite longueur de section transversale.

2. Bloqueur centrifuge selon la revendication 1, **caractérisé en ce que** la masse d'inertie (14 ; 148) est agencée sur le rotor (10 ; 110) de telle façon que le mouvement en direction périphérique est libéré uniquement quand la masse d'inertie (14 ; 148) atteint la seconde position.

3. Bloqueur centrifuge selon la revendication 1 ou 2, **caractérisé en ce que** la surface de contact (16 ; 116) est réalisée de telle façon que la distance à la paroi de blocage (22, 122) diminue jusqu'à une valeur qui est plus petite qu'une largeur de la masse d'inertie (14 ; 148) en direction radiale plus celle du rotor (10 ; 110).

4. Bloqueur centrifuge selon l'une au moins des revendications précédentes, **caractérisé en ce qu'**il est prévu deux masses d'inertie (14 ; 148) qui sont à distance du rotor (10 ; 110) et des deux côtés du rotor (10 ; 110) en étant reliées l'une à l'autre au moyen d'au moins deux éléments (26 ; 150) présentant l'élasticité d'un ressort, de telle façon que les éléments présentant l'élasticité d'un ressort (26, 150) sollicitent les masses d'inertie (14 ; 148) radialement l'une vers l'autre avec une force et les poussent contre la surface de contact (16 ; 116) sur le rotor (10 ; 110).

5. Bloqueur centrifuge selon la revendication 4, **caractérisé en ce que** les masses d'inertie (14 ; 148) forment entre elles une ouverture ovale en section transversale, qui entoure la surface de contact ovale (16 ; 116) du rotor (10 ; 110).

6. Bloqueur centrifuge selon l'une au moins des revendications précédentes, **caractérisé en ce que** la masse d'inertie (14 ; 148) est réalisé comme un segment annulaire, en particulier un segment en forme de demi-anneau, ou encore en forme de D ou en forme de U.

7. Bloqueur centrifuge selon la revendication 6, **caractérisé en ce que** des évidements sont ménagés aux extrémités libres de la masse d'inertie (14) pour la réception d'un élément de ressort (26).

8. Bloqueur centrifuge selon l'une au moins des revendications précédentes, **caractérisé en ce que** la paroi de blocage (22, 122) du composant de blocage (12 ; 112) entoure radialement le rotor (10 ; 110).

9. Dispositif descendeur pour un câble de sécurité comprenant :
- un axe (111),
- un premier dispositif de freinage (132) agencé sur l'axe (111) et
- un second dispositif de freinage (134) qui est agencé sur le même axe (111) que le premier dispositif de freinage (132),
- dans lequel le premier dispositif de freinage (132) comprend un bloqueur centrifuge avec des masses d'inertie (144) ;
**caractérisé en ce que**
- le second dispositif de freinage (134) est réalisé sous forme de bloqueur centrifuge avec un rotor (110) et un composant de blocage, dans lequel au moins une masse d'inertie (148) est agencée sur le rotor (110) en déplacement par rapport au rotor (110) en direction radiale et est réalisée de telle manière qu'au-dessous d'une vitesse de rotation prédéterminée du rotor (110) la masse d'inertie (148) est agencée à distance du composant de blocage sur le rotor (110) dans une première position, de sorte que le rotor (110) est librement rotatif par rapport au composant de blocage et, au-dessus de la vitesse de rotation prédéterminée du rotor (110), elle exécute sous une force centripète un mouvement radial par rapport au rotor (110) jusque dans une seconde position, de sorte que la masse d'inertie (148) vient buter contre une paroi de blocage du composant de blocage et établit une coopération de forces mécanique entre le rotor (110) et le composant de blocage, et la masse d'inertie (148) est agencée sur le rotor (110) additionnellement de manière déplaçable en direction périphérique au moins en sens contraire au sens de rotation du rotor (110), et une surface de contact (116) entre le rotor (110) et la masse d'inertie (148) est réalisée de telle manière qu'en partant de la première position, une distance, vue en direction périphérique au moins en sens contraire au sens de rotation du rotor (110), entre la surface de contact (116) et la paroi de blocage du composant de blocage diminue, et
- **en ce que** le premier dispositif de freinage (132) est relié solidairement en rotation avec le rotor (110), de sorte qu'un engagement, conditionné par la vitesse de rotation, des masses d'inertie (144) du premier dispositif de freinage (132) avec une paroi de blocage mène à un freinage du rotor (110), grâce à quoi une distance entre la surface de contact (116) et la paroi de blocage du composant de blocage du second dispositif de freinage (134) diminue.

10. Dispositif descendeur selon la revendication 9, **caractérisé en ce que** le composant de blocage comprend un boîtier, et la paroi de blocage est réalisée dans le boîtier.

11. Dispositif descendeur selon l'une des revendications 9 ou 10, **caractérisé en ce que** le premier dispositif de freinage (132) et le second dispositif de freinage (134) sont agencés conjointement sur le rotor (110).

12. Dispositif descendeur selon la revendication 11, **caractérisé en ce que** le rotor (110) est agencé avec possibilité de rotation par rapport à l'axe (111) et coaxialement à l'axe (111).

13. Dispositif descendeur selon la revendication 12, **caractérisé en ce que** le rotor (110) et le second dispositif de freinage (134) sont réalisés est agencé de telle façon qu'une liaison à coopération de friction est établie entre le câble de sécurité et le rotor (119)

14. Dispositif descendeur selon la revendication 13, **caractérisé en ce que** le rotor (110) comprend un couvercle (138) relié solidairement en rotation avec lui-même, lequel est agencé axialement entre le premier et le second dispositif de freinage (132, 134) de telle façon que ladite au moins une masse d'inertie (148) du second dispositif de freinage (138) établit une liaison à coopération de friction avec le couvercle (138).

15. Dispositif descendeur selon l'une au moins des revendications 9 à 14, **caractérisé en ce qu'**il est prévu une poulie à câble pour le câble de sécurité, laquelle comprend au moins un élément d'entraînement qui vient buter contre au moins une masse d'inertie (148) du second dispositif de freinage (134) de sorte qu'une coopération de formes est établie entre la masse d'inertie (148) et la poulie à câble.

16. Dispositif descendeur selon la revendication 15, dans lequel le second dispositif de freinage (134) et réalisé sous forme de bloqueur centrifuge avec deux masses d'inertie (148) qui sont à distance du rotor (110) et des deux côtés du rotor (110) en étant reliées l'une à l'autre au moyen d'au moins deux éléments présentant l'élasticité d'un ressort (150) de telle façon que les éléments présentant l'élasticité d'un ressort (150) sollicitent les masses d'inertie (148) radialement l'une vers l'autre avec une force, et les poussent contre la surface de contact (116) sur le rotor (110), **caractérisé en ce qu'**il est prévu deux éléments d'entraînement qui s'engagent axialement dans des intervalles entre les deux masses d'inertie (148) du second dispositif de freinage (134).

17. Dispositif descendeur selon l'une au moins des revendications 15 ou 16, **caractérisé en ce que** ledit au moins un élément d'entraînement est réalisé d'une seule pièce avec la poulie à câble.

18. Dispositif antichute, en particulier protecteur mobile d'escalade, qui se déplace conjointement avec une personne à protéger sur un guidage mobile ou fixe servant de système de sécurité, en particulier rail de sécurité, échelle de protection d'escalade ou câble de sécurité, comprenant un bloqueur centrifuge,
**caractérisé en ce que** le bloqueur centrifuge est réalisé selon l'une au moins des revendications 1 à 8.
